# EUROPÄISCHE PATENTSCHRIFT

(11) **EP 1 147 587 B1**
(45) Veröffentlichungstag und Bekanntmachung des Hinweises auf die Patenterteilung: **19.03.2003**
(21) Anmeldenummer: 99966855.1
(22) Anmeldetag: 13.12.1999
(51) Int. Cl.: H02G 11/00, F16G 13/16

(54) **LEITUNGSFÜHRUNGSEINRICHTUNG**
LINE GUIDE DEVICE
DISPOSITIF DE GUIDAGE DE LIGNES

(30) Priorität: 31.12.1998 DE 19860948
(43) Veröffentlichungstag der Anmeldung: 24.10.2001
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Patentanwälte Lippert, Stachow, Schmidt & Partner
(86) Internationale Anmeldenummer: DE9903977
(87) Internationale Veröffentlichungsnummer: WO00041284

(56) Entgegenhaltungen:
- EP-A- 0 490 022
- DE-A- 3 431 531
- DE-A- 19 512 088

## Beschreibung

Die Erfindung betrifft eine Leitungsführungseinrichtung zur Führung von Leitungen oder Kabeln, umfassend einen Führungskanal mit einem durchgehenden langgestreckten Gleitband, das unter Bildung eines Untertrums, eines Umlenkbereichs sowie eines oberhalb des Untertrums geführten Obertrums ablegbar ist, wobei ein Ende der Leitungsführungseinrichtung mit einer stationären Einrichtung und ein anderes Ende mit einer hin- und herbeweglichen Einrichtung verbindbar ist.

Die EP 0 490 022 B1 offenbart eine derartige dem Oberbegriff des Anspruchs 1 entsprechende Leitungsführungseinrichtung. In letzterer sind eine oder mehrere Leitungen von einem Kabelmantel umfaßt, wobei an dem Außenumfang des Kabelmantels eine in Leitungslängsrichtung wirksame Gleiteinrichtung guter Gleitfähigkeit vorgesehen ist.

Eine derartige Leitungsführungseinrichtung erstreckt sich somit durchgehend über die gesamte Länge der geführten Leitung, so daß die Leitungsführungseinrichtung nicht aus einzelnen separaten Kettengliedern zusammengesetzt ist, wie dies bei Energieführungsketten der Fall ist. Hierdurch ist der Montageaufwand der entsprechenden Einrichtung vermindert, zum anderen besteht nicht die Gefahr einer unerwünschten Trennung der Gelenkverbindungen benachbarter Kettenglieder z.B. bei hoher Belastung.

Nachteilig bei der bekannten Leitungsführungseinrichtung ist, daß diese bezüglich der zu führenden Leitungen nicht flexibel einsetzbar ist, da die Leitungen aus dem gemeinsamen Kabelmantel nicht beliebig entfernt werden können bzw. der Kabelmantel nicht auf einfache Weise an unterschiedliche Anforderungen anpaßbar ist.

Der Erfindung liegt daher die Aufgabe zugrunde, eine Leitungsführungseinrichtung zu schaffen, welche bezüglich der zu führenden leitungen flexibel einsetzbar ist.

Erfindungsgemäß wird diese Aufgabe dadurch gelöst, daß der Führungskanal aus einer Vielzahl von Führungsgliedern besteht, die an der dem gegenüberliegenden Trum abgewandten Seite auf dem Gleitband zueinander verschwenkbar angeordnet und lösbar an dem Gleitband befestigt sind. Die die Leitungen führenden Führungsglieder können aufgrund der lösbaren Befestigung an dem Gleitband einfach durch andere Führungsglieder ausgetauscht werden, die z.B. an die zu führende Anzahl von Leitungen oder deren Querschnitt besser angepaßt sind. Hierzu können beispielsweise Führungsglieder unterschiedlicher Höhe oder Breite oder solche mit geeigneter Innenraumaufteilung oder weiteren Einrichtung zur definierten Führung der Leitungen eingesetzt werden. Entsprechend kann bei gegebener Ausführung der Führungsglieder auch das Gleitband ausgetauscht werden, welches z.B. hinsichtlich seiner Biegesteifigkeit den jeweiligen Anforderungen besser angepaßt ist. Eine seitlich exakte Führung der Leitungen ist somit unabhängig von der Steifigkeit des Gleitbandes gegeben, das zudem einfach herstellbar ist. Das Obertrum kann dabei jeweils frei tragend oder auf dem Untertrum gleitend geführt sein.

Die Führungsglieder können derart ausgebildet sein, daß sie eine Bewegung der geführten Leitungen in drei Raumrichtungen senkrecht zur Längsrichtung des Gleitbands, d.h. quer zum Gleitband und vom Gleitband weg, begrenzen, wobei eine Bewegung der geführten Leitungen in der vierten Richtung durch das Gleitband begrenzt wird. Hierzu können die Führungsglieder im wesentlichen U-förmig ausgebildet sein, wobei sie mit den freien Enden der Schenkel an dem Gleitband festgelegt sind.

Vorteilhafterweise sind die Führungsglieder derart ausgebildet, daß sie eine Bewegung der geführten Leitungen in vier Richtungen senkrecht zur Längsrichtung des Gleitbands begrenzen. Die geführten Leitungen werden somit auch dann durch die Führungsglieder zusammengehalten, wenn diese von dem Gleitband demontiert sind.

Die eine Bewegung der Leitungen quer zu deren Längsrichtung begrenzenden seitlichen Bereiche der Führungsglieder können bei einer langgestreckten Anordnung der Leitungsführungseinrichtung eine durchgehende Seitenwand bilden. Sie können auch stegartig ausgeführt sein und sich z.B. nur über einen Teil der Länge der Führungsglieder erstrecken. Entsprechendes gilt für die quer zum Gleitband verlaufenden Führungsbereiche der Führungsglieder.

Die Führungsglieder können aneinanderstoßend oder in Längsrichtung der Leitungsführungseinrichtung voneinander beabstandet an dem Gleitband befestigt sein und einstückig oder mehrteilig ausgeführt sein. Insbesondere kann der sich im wesentlichen quer zu dem Gleitband erstreckende Bereich der Führungsglieder verschwenkbar zu den seitlichen Führungsbereichen ausgeführt sein oder eine Durchbrechung aufweisen, so daß die zu führenden Leitungen unter Deformation der Führungsglieder durch diese Durchbrechung in den Führungskanal einführbar sind. Um eine unbeabsichtigte Entfernung der Leitungen aus dem Führungskanal zu verhindern, können die durch die Durchbrechung getrennten Bereiche des Führungsgliedes einen überlappenden Bereich aufweisen.

Die Befestigung der Führungsglieder an dem Gleitband kann durch jegliche hierfür geeignete Mittel erfolgen. Insbesondere können jeweils mehrere seitlich und/oder in Längsrichtung des Gleitbandes beabstandete Befestigungsmittel zur Festlegung eines Führungsgliedes vorgesehen sein.

Vorteilhafterweise sind an dem Gleitband Mittel zur kraftund/oder formschlüssigen Befestigung der Führungsglieder einstückig angeformt. Die Anformung der Befestigungsmittel kann z.B. in einem Spritzguß- oder Extrusionsverfahren oder in einem nachfolgenden Herstellungsschritt erfolgen.

Zur Befestigung der Führungsglieder an dem Gleitband können diese in Richtung der Flächennormalen des Gleitbandes auf entsprechend ausgebildete Rastmittel aufgeschoben werden.

Gemäß einer anderen bevorzugten Ausführungsform sind an dem Gleitband Befestigungsmittel, z.B. in Form geeigneter Befestigungsleisten oder Befestigungsnute, vorgesehen auf oder in die die Führungsglieder in einer Richtung parallel zur Gleitbandebene, vorzugsweise senkrecht zur Längsrichtung des Gleitbandes, aufschiebbar sind. In ihrer Sollstellung können die Führungsglieder durch Rastmittel festgelegt werden.

Die Befestigungsmittel können insbesondere derart ausgebildet sein, daß ein beliebiges Führungsglied von dem Gleitband demontierbar ist, ohne die benachbarten Führungsglieder von dem Gleitband entfernen zu müssen. Dies wird insbesondere auch dadurch ermöglicht, daß erfindungsgemäß die Führungsglieder auf der dem gegenüberliegenden Trum abgewandten Seite des Gleitbands befestigt sind.

Das Gleitband kann einen rechtwinkligen Querschnitt aufweisen oder auch profiliert sein, wodurch die Biegesteifigkeit des Gleitbands in dessen Längsrichtung beeinflussbar ist. Insbesondere kann das Gleitband sich in dessen Längsrichtung erstreckende erhabene und zurückspringende Bereiche aufweisen, wobei die erhabenen Bereiche von Obertrum und Untertrum als Gleitflächen fungieren können, wenn Ober- und Untertrum gleitend aufeinander geführt werden. Die zurückspringenden Bereiche können zugleich der Aufnahme von Befestigungsmitteln für die Führungsglieder dienen.

Vorteilhafterweise an der Leitungsführungsanordnung Anschläge zur Begrenzung des Verschwenkwinkels benachbarter Abschnitte des Gleitbands vorgesehen, wodurch der Radius des Umlenkbereichs definierbar ist.

Gemäß einer vorteilhaften Ausführungsform sind an den Stirnseiten der Führungsglieder Abschrägungen vorgesehen, die bei einem bestimmten Verschwenkwinkel an die entsprechenden Abschrägungen des benachbarten Führungsgliedes anlegbar sind und als Anschlagflächen wirken. Hierbei können die Führungsglieder das Gleitband seitlich umfassen, wobei die Abschrägungen auf Höhe des Gleitbandes vorgesehen sind.

Gemäß einer anderen vorteilhaften Ausführungsform sind die seitlichen Bereiche der Führungsglieder mit sich in Richtung auf das benachbarte Führungsglied erstreckenden Vorsprüngen versehen, die einen Bereich des benachbarten Führungsgliedes hintergreifen und an diesen unter Begrenzung des Verschwenkwinkels benachbarter Führungsglieder anlegbar sind.

Die sich in Richtung auf das benachbarte Führungsglied erstreckenden Vorsprünge können z.B. aussenseitig an dem benachbarten Führungsglied vorbeigeführt sein oder in Schlitzen der Seitenteile der Führungsglieder geführt sein. Die Vorsprünge können derart ausgebildet sein, daß auch bei Verschwenkung der Führungsglieder zueinander ein Führungskanal mit einer geschlossenen Seitenwand resultiert.

Die sich in Richtung auf das jeweils benachbarte Führungsglied hin erstreckenden Vorsprünge ein nur geringes Spiel zu den benachbarten Führungsgliedern aufweisen und hierdurch unabhängig von deren Funktion als Anschlagelemente eine Torsion des Gleitbands verhindern.

Als Mittel zur Begrenzung der Bewegung der Führungsglieder quer zum Gleitband können auch an dem Gleitband Führungsrippen vorgesehen sein, die auf der dem gegenüberliegenden Trum zugewandten Seite des Gleitbands angeordnet und seitlich voneinander beabstandet sind, so daß zwischen diesen korrespondierende Führungsrippen des gegenüberliegenden Trums positionierbar sind. Die Führungsrippen können einstückig an dem Gleitband angeformt oder lösbar an diesem befestigt sein.

Das Gleitband kann in dessen Längsrichtung gleichbleibende Materialeigenschaften bzw. eine gleichbleibende Profilierung aufweisen. Das Gleitband kann auch alternierend zueinander angeordnete Bereiche mit erhöhter und verringerter Biegesteifigkeit bezüglich der Verschwenkebene der Führungsglieder aufweisen, die sich in den Materialeigenschaften und/oder der Profilierung unterscheiden können und z.B. als Filmscharniere ausgebildet sind. Hierdurch werden gelenkartige Bereiche geschaffen, die vorzugsweise mittig zwischen benachbarten Führungsgliedern angeordnet sind.

Die Breite der Führungselemente kann der Breite des Gleitbands entsprechen, ohne hierauf beschränkt zu sein. So kann die Breite der Führungsglieder ohne weiteres kleiner oder größer als die Breite des Gleitbandes sein. Es können auch mehrere Führungsglieder nebeneinander auf einem Gleitband angeordnet sein, die Führungsglieder können sich auch über mehrere, nebeneinander angeordnete Gleitbänder erstrecken. Die Befestigung nebeneinander angeordneter Gleitbänder aneinander kann durch die an den Führungsgliedern vorgesehenen Befestigungsmitteln erfolgen, es können hierzu auch zusätzliche Mittel vorgesehen sein. Hierdurch ist es möglich, nebeneinander angeordnete Leitungsführungseinrichtungen lösbar aneinander zu befestigen, wenn diese gemeinsam zu verfahren sind.

Die Mittel zur Befestigung nebeneinander liegender Leitungsführungseinrichtungen können insbesondere an den nebeneinander angeordneten Gleitbändern angreifen, insbesondere können diese Mittel selber in Form eines Gleitbandes ausgeführt sein, welches vorteilhafterweise zugleich auch selbständig in einer erfindungsgemäßen Leitungsführungseinrichtung einsetzbar ist.

Die Leitungsführungseinrichtung ist durch Zerstückelung des Gleitbandes und Anfügen von Gleitbandstücken längenveränderlich .

Gleitband und Führungsglieder können aus dem gleichen oder aus unterschiedlichen Materialien gefertigt ein.

Die Erfindung sei nachfolgend beispielhaft erläutert und anhand der Figuren beispielhaft beschrieben. Es zeigen:
- Fig. 1: einen Querschnitt einer erfindungsgemäßen Leitungsführungseinrichtung;
- Fig. 2: eine Seitenansicht der Leitungsführungseinrichtung nach Fig. 1;
- Fig. 3: eine Draufsicht auf ein Gleitband;
- Fig. 4: eine frontale Ansicht einer Leitungsführungseinrichtung gemäß einer weiteren Ausführungsform;
- Fig. 5: eine weitere Ausführungsform einer Leitungsführungseinrichtung;
- Fig. 6: eine Ausführungsform einer Leitungsführungseinrichtung mit zweiteiligem Führungsglied in frontaler Ansicht;
- Fig. 7: einen Querschnitt einer Leitungsführungseinrichtung gemäß einer weiteren Ausführungsform;
- Fig.8: eine Draufsicht auf Gleitbänder unterschiedlicher Ausführungsform gemäß Fig. 7;
- Fig. 9: eine Seitenansicht einer Leitungsführungseinrichtung gemäß Fig. 7;
- Fig.10: eine Seitenansicht einer Leitungsführungseinrichtung gemäß Fig. 7.

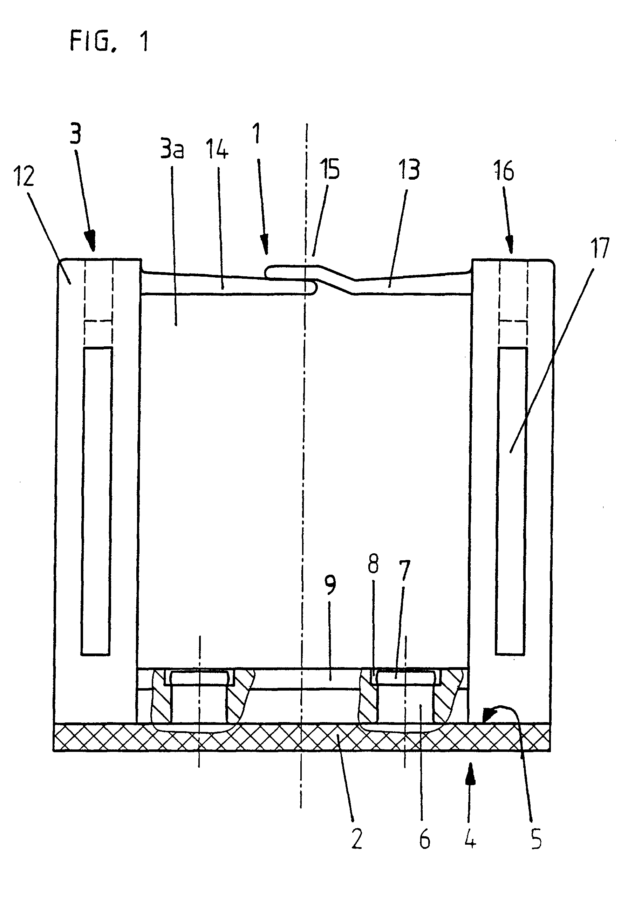

Figur 1 zeigt einen Querschnitt durch eine Leitungsführungseinrichtung 1, die aus einem flachen Gleitband 2 mit rechteckigem Querschnitt sowie einem auf diesem festgelegten Führungsglied 3, das einen Führungskanal 3a einschließt. Die gemäß der Figur unten angeordnete Seite 4 des Gleitbandes 2 dient als Gleitfläche, wenn das Obertrum des Gleitbandes auf dem Untertrum gleitend geführt ist.

Die Oberseite 5 des Gleitbands ist mit zwei parallel zueinander verlaufenden Reihen von Noppen 6 versehen, die einstükkig an dem Gleitband 2 angeformt sind. An dem freien Ende der Noppen 6 sind Ringwülste 7 angeordnet, die durch Eingriff in die hinterschnittenen Ausnehmungen 8 an der Unterseite der Führungsglieder 3 diese rastend an dem Gleitband 2 festlegen. Die Noppen 6 sind auf 1/4 und 3/4 der Breite des Gleitbands 2 angeordnet, so daß anstelle des gezeigten Führungsglieds 3 jeweils zwei Führungsglieder halber Breite nebeneinander auf dem Gleitband befestigbar sind, ohne seitlich vorzustehen.

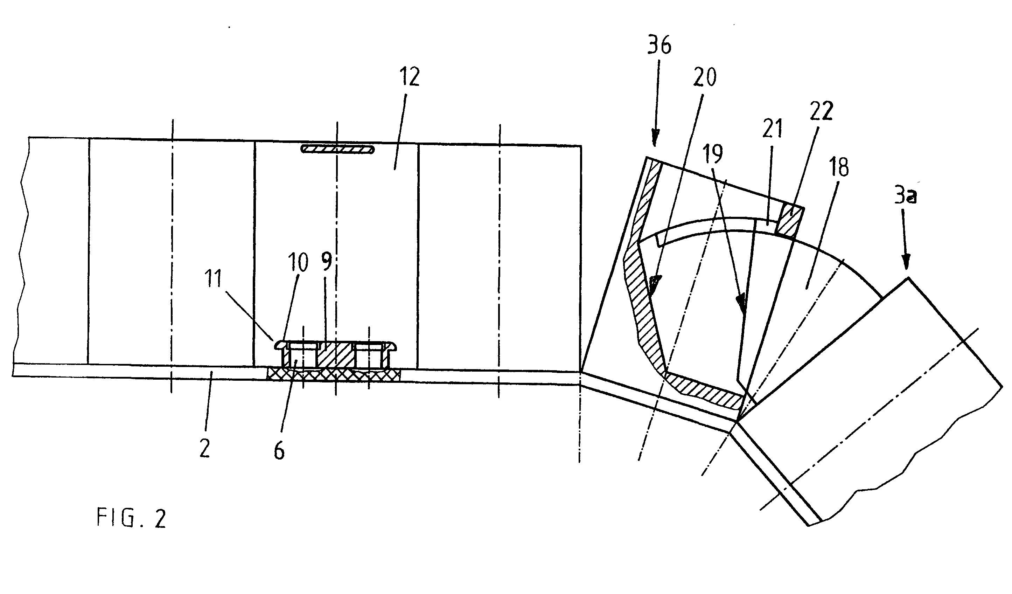

Das Führungsglied 3 ist einstückig ausgeführt und besteht aus einem stegartigen Bodenteil 9 (s. Figur 2), in welchem die beidseitig offenen stufenförmigen Ausnehmungen 8 angeordnet sind. Das Bodenteil 9 erstreckt sich nur über einen Teil der Länge des Führungsglieds 3 und weist jeweils einen vorderen und hinteren über die Basis des Bodenteils hinausragenden Abschlußsteg 10 auf, dessen obere Kante 11 abgerundet ist, um Beschädigungen der geführten Leitungen zu verhindern.

Gemäß Figur 2 sind die Seitenwände 12 der Führungsglieder 3 plattenartig ausgebildet und bilden bei gestreckter Anordnung der Leitungsführungseinrichtung eine geschlossene Seitenwand. Das dem Gleitband 2 gegenüberliegende Ende der kastenartigen Führungsglieder wird durch zwei Querstege 13, 14 begrenzt, die einstückig an den Seitenwänden 12 angeformt sind und einen Überlappungsbereich 15 aufweisen. Der Überlappungsbereich 15 schließt mit der Oberseite 16 der Seitenwände 12 ab, so daß die Leitungsführungseinrichtung 1 auch auf den Oberseiten 16 der Führungsglieder 3 z.B. in einer Führungsrinne abgelegt werden kann. Die Querstege 13, 14 können aber z.B. auch mit einem Höhenversatz an den Seitenwänden 12 angeordnet sein. Die Querstege 13, 14 erstrecken sich jeweils nur über einen Teil der Länge der Führungsglieder 3.

Wie aus den Figuren 1 und 2 hervorgeht, sind die Seitenwände 12 mit mittig angeordneten Schlitzen 17 versehen, in welche im wesentlichen kreissegmentförmige Vorsprünge 18 mit planparallelen Seitenflächen, die an den Stirnseiten des benachbarten Führungsgliedes 3b angeordnet sind, eingreifen. Die Vorsprünge 18 erstrecken sich in der Verschwenkebene der Führungsglieder 3 und sind mit nur geringem Spiel in den Schlitzen 17 geführt, wodurch eine Torsion des Gleitbands 2 erschwert wird.

Die Außenkante 19 des Vorsprungs 18, die dem zugeordneten Führungsglied 3 abgewandt ist, dient als Anschlagfläche, die bei geradliniger Anordnung der Leitungsführungseinrichtung mit der den Schlitz 17 seitlich begrenzenden Schräge 20 zur Anlage bringbar ist.

An dem Vorsprung 18 ist ein dem Gleitband 2 abgewandter vorkragender Bereich 21 vorgesehen, der mit seiner dem zugehörigen Führungsglied 3 zugewandten Seite mit einem den Schlitz 17 überbrückenden Steg 22 zur Anlage bringbar ist, wodurch der maximale Verschwenkwinkel benachbarter Führungsglieder beschränkt wird. Figur 2 zeigt den Vorsprung 18 in seinen beiden maximalen Verschwenkstellungen.

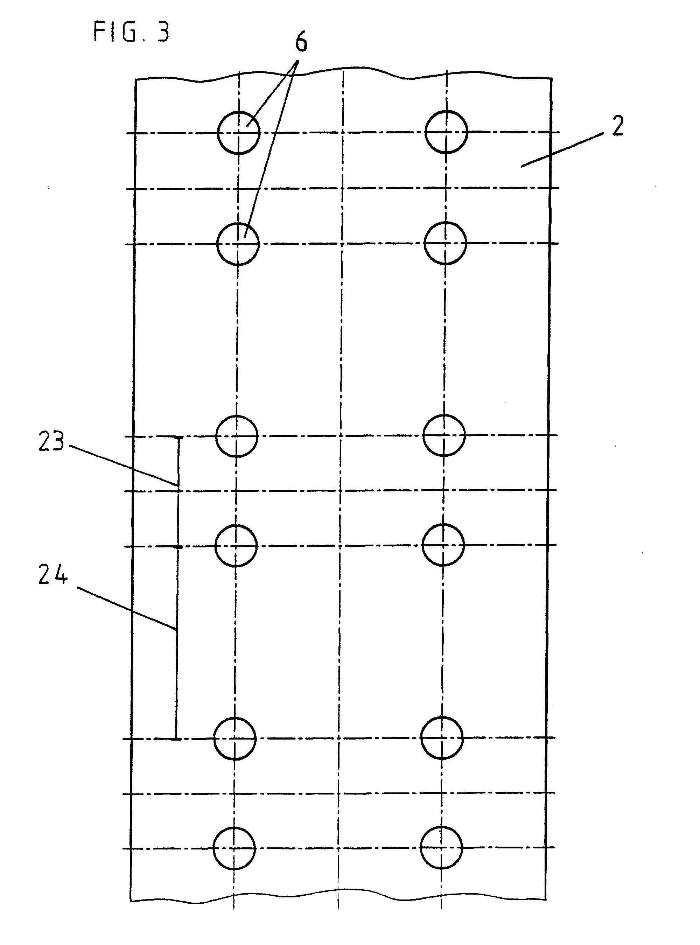

Wie aus Figur 3 hervorgeht, sind die Noppen 6 zur Halterung der Führungsglieder 3 in einer Doppelreihe auf dem Gleitband 2 angeordnet und jeweils mittig zwischen einer der Außenkanten und der Mittellinie des Gleitbands positioniert. Die Noppen weisen in Längsrichtung des Gleitbands 2 alternierend kurze und lange Abstände 23, 24 zueinander auf und sind hierdurch zu Gruppen von je vier Noppen zusammengefaßt, mittels derer jeweils ein Führungsglied 3 befestigbar ist. Der längere Abstand 24 bildet einen Biegeschenkel, dessen Länge den Radius des Umlenkbereichs der Leitungsführungseinrichtung wesentlich mitbestimmt.

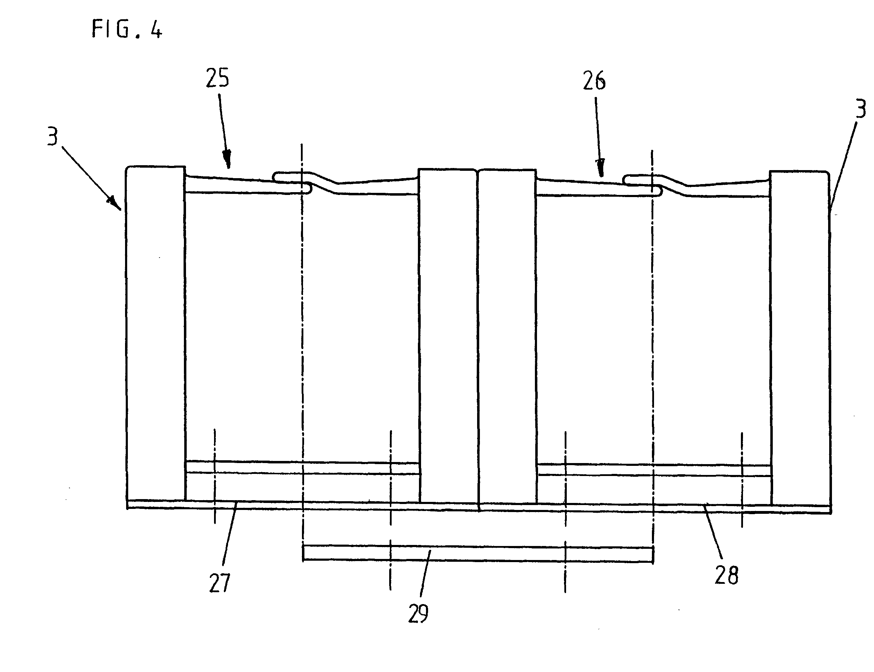

In Figur 4 ist schematisch eine Leitungsführungseinrichtung dargestellt, die aus zwei selbständigen Leitungsführungseinrichtungen 25, 26 aufgebaut ist, die jeweils aus einem Gleitband 27, 28 und auf diesen montierten Führungsgliedern 3 entsprechend der in Figur 1 gezeigten Ausführung bestehen. Die Gleitbänder 27, 28 werden durch ein weiteres Gleitband 29 miteinander verbunden, welches symmetrisch zu den Leitungsführungseinrichtungen 25, 26 angeordnet ist und dessen Breite der der Gleitbänder 27, 28 entspricht. Das Gleitband 29 ist über geeignete Befestigungsmittel an den Gleitbändern 27, 28 festgelegt und identisch zu diesen ausgebildet. Hierzu können an dem Gleitband 29 Noppenanordnungen vorgesehen sein, wie sie in den Figuren 1-3 dargestellt sind, wobei die Noppen in korrespondierende Ausnehmungen der darüber angeordneten Gleitbänder eingreifen, welche zwischen den Gruppen von Noppen, die der Befestigung je eines Führungsglieds dienen, angeordnet sein können. Durch diese Anordnung können die beiden Leitungsführungseinrichtungen 25, 26 gemeinsam in deren Längsrichtung hin- und herbewegt werden.

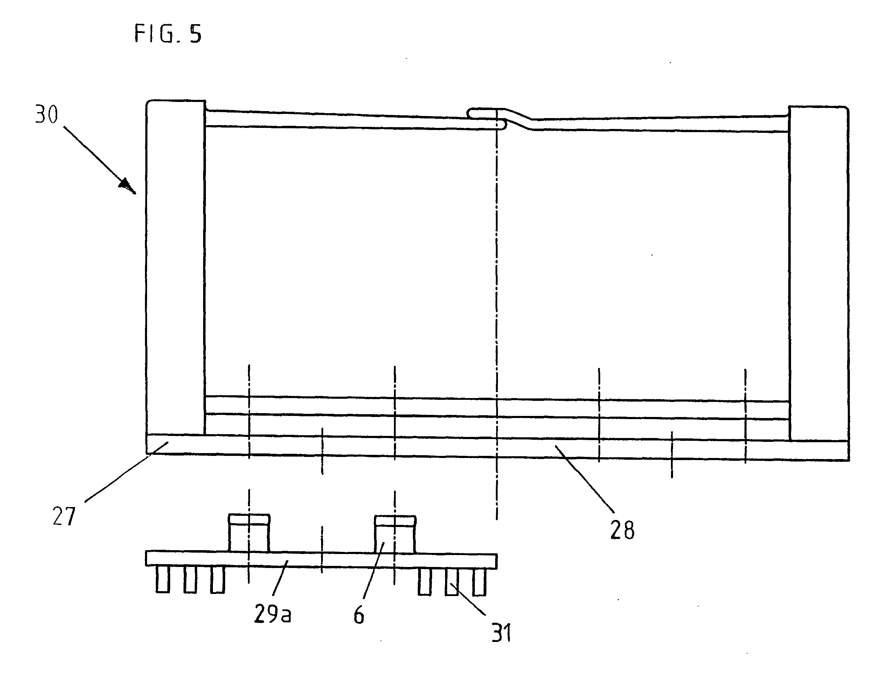

Wie in Figur 5 gezeigt, kann das Führungsglied 30 sich über zwei Gleitbänder 27, 28 erstrecken, welche über das Führungsglied 30 aneinander befestigt sind.

Wie in Figur 5 (unten) gezeigt, können an der dem gegenüberliegenden Trum zugewandten Seite des Gleitbandes 29a Führungsrippen 31 angeordnet sein, wobei der Abstand der Führungsrippen 31 zueinander so bemessen ist, daß eine Führungsrippe des gegenüberliegenden Trums zwischen diesen positionierbar ist. Hierdurch wird eine Verzahnung von Ober- und Untertrum erreicht und eine Querverschiebung derselben relativ zueinander verhindert. Das Gleitband 29a kann an der Unterseite des Gleitbandes 27 befestigt werden oder an Stelle desselben vorgesehen sein.

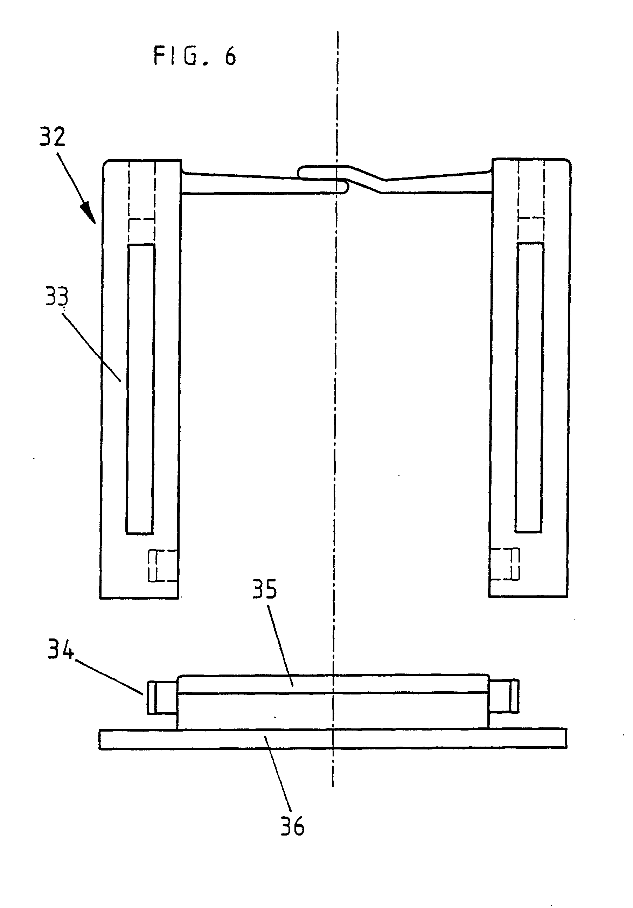

Figur 6 zeigt eine alternative Ausführung eines Führungsgliedes 32, welches eine Bewegung der geführten Leitungen in drei Raumrichtungen begrenzt. Das Führungsglied ist zweiteilig ausgeführt, wobei die Seitenwände 33 jeweils über Rastvorsprünge 34 an Stegen 35, die einstückig an dem Gleitband 36 angeformt sind, befestigbar sind. Die Unterseite des Gleitbandes 36 kann als Gleitfläche fungieren.

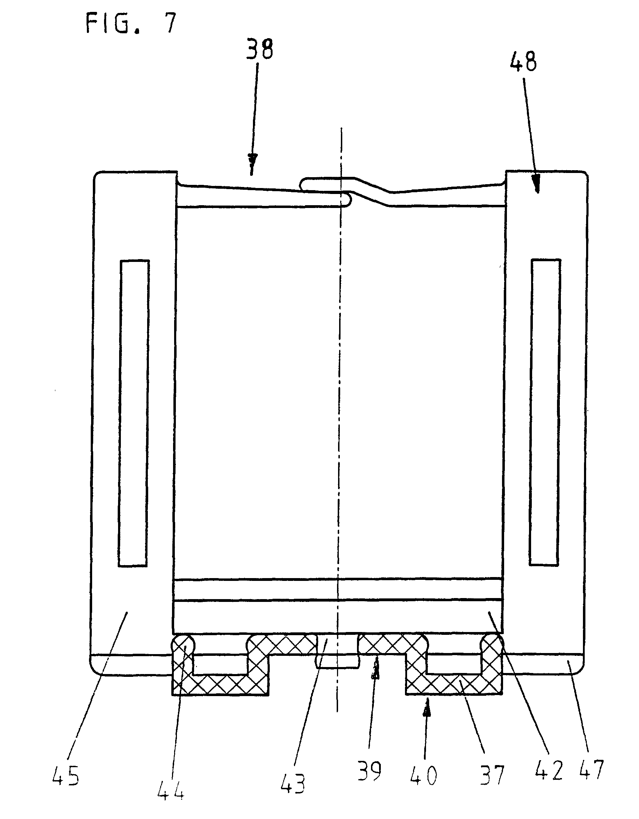

Die Figuren 7 - 10 zeigen eine Leitungsführungseinrichtung gemäß einer alternativen Ausführungsform.

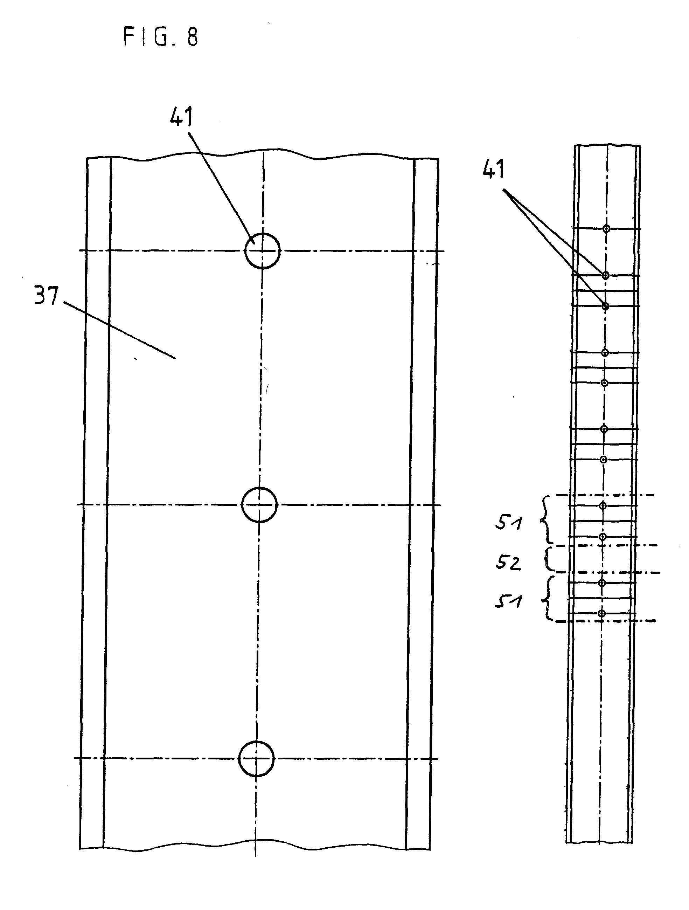

Gemäß Figur 7 ist das Gleitband 37 mit einer mäandrierenden Profilierung versehen, so daß bezogen auf das Führungsteil 38 zurückspringende Bereiche 39 und vorspringende Bereiche 40 mit ebenen Gleitunterseiten ausgebildet sind. Die zurückspringenden Bereiche 39 sind, s. auch Figur 8, mit Durchtrittsöffnungen 41 zur rastenden Aufnahme von an den Bodenteilen 42 der Führungsglieder angeordneten Befestigungsnoppen 43 versehen. Das Bodenteil 42 liegt dabei auf dem zurückspringenden Bereich 39 sowie den das Gleitband seitlich begrenzenden Stegen 44 auf. Die Seitenwände 45 erstrecken sich über einen Teil der Höhe der Stege 44 und liegen hierbei an diesen an, wodurch die Führungsglieder verdrehsicher an dem- Gleitband festgelegt sind.

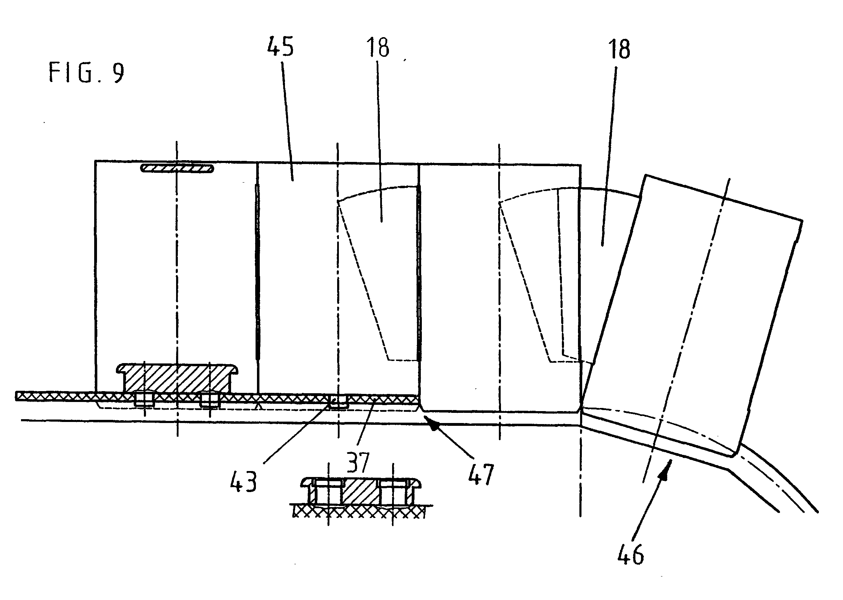

Der in der geschlitzten Seitenwand des benachbarten Führungsgliedes geführte Vorsprung 18 (Fig. 9) dient der torsionsfreien Bewegung der Leitungsführungseinrichtung sowie als Anschlag bei der Überführung der Leitungsführungseinrichtung in ihren gestreckten Zustand. Eine Begrenzung der Verschwenkbewegung der Führungsglieder im Umlenkbereich 46 der Leitungsführungseinrichtung wird durch die Abschrägungen 47 erzielt, welche an den Stirnseiten 48 der Seitenwände 45 auf Höhe des Gleitbandes 37 vorgesehen sind.

Gemäß Figur 8 (links) ist das Gleitband 37 mit einer Reihe gleichmäßig beabstandeter Durchtrittsöffnungen 41 zur Aufnahme von Befestigungsmitteln versehen, wobei die Führungsglieder je nach Ausführungsform ein, zwei oder auch mehrere Befestigungsnoppen aufweisen können. Gemäß Figur 8 (rechts) weist das Gleitband eine Reihe von Durchtrittsöffnungen 41 mit alternierend kurzem und langem Abstand auf, wobei jeweils zwei enger benachbarte Durchtrittsöffnungen der Befestigung eines Führungsglieds dienen. Die Befestigungsbereiche 51 für die Führungsglieder bestehen aus einem Material geringerer Elastizität als die zwischen diesen angeordneten Biegebereiche 52.

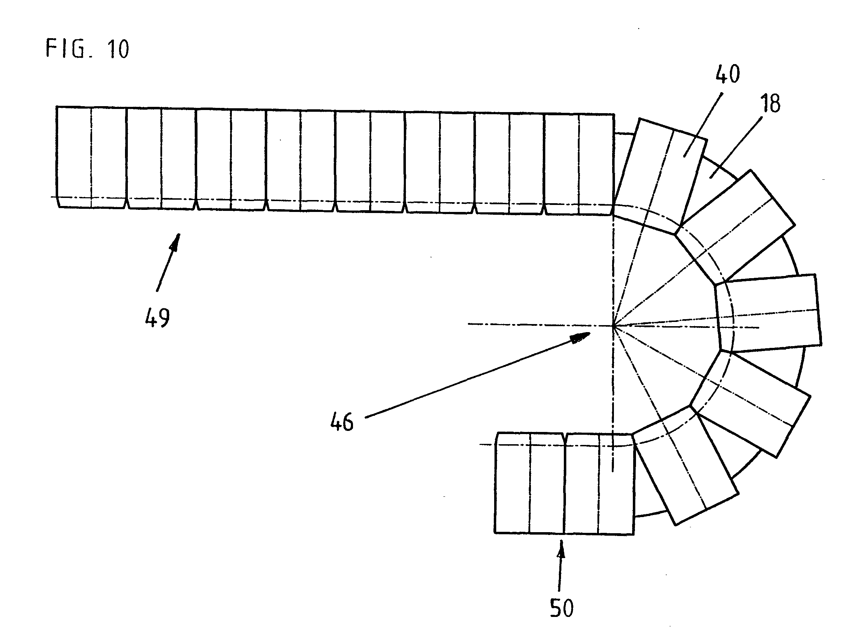

Figur 10 zeigt eine Leitungsführungseinrichtung in seitlicher Anordnung mit Obertrum 49, Umlenkbereich 46 und Untertrum 50 Im Umlenkbereich treten die Vorsprünge 18 zur seitlichen Führung der Leitungsführungseinrichtung aus den in den Seitenwänden 40 vorgesehenen Schlitzen hervor und bilden eine im wesentlichen geschlossene Seitenwand. Aufgrund stets vorhandener Toleranzen oder bei Verschmälerung der Seitenwände 40 zu ihrem dem Gleitband abgewandten Ende kann anstelle eines freitragenden Obertrums ein auf dem Untertrum geführtes Obertrum erhalten werden.

### Bezugszeichenliste

- 1: Leitungsführungseinrichtung
- 2: Gleitband
- 3: Führungsglied
- 3a: Führungskanal
- 3b: Führungsglied
- 4: Unterseite
- 5: Oberseite
- 6: Noppen
- 7: Ringwulst
- 8: Ausnehmung
- 9: Bodenteil
- 10: Steg
- 11: Kante
- 12: Seitenwand
- 13: Quersteg
- 14: Quersteg
- 15: Überlappungsbereich
- 16: Oberseite
- 17: Schlitz
- 18: Vorsprung
- 19: Außenkante
- 20: Schräge
- 21: vorgekröpfter Bereich
- 22: Steg
- 23: Abstand
- 24: Abstand
- 25: Leitungsführungseinrichtung
- 26: Leitungsführungseinrichtung
- 27: Gleitband
- 28: Gleitband
- 29: Gleitband
- 29a: Gleitband
- 30: Führungsglied
- 31: Führungsrippe
- 32: Führungsglied
- 33: Seitenwand
- 34: Rastvorsprung
- 35: Steg
- 36: Gleitband
- 37: Gleitband
- 38: Führungsglied
- 39: zurückspringender Bereich
- 40: vorspringender Bereich
- 41: Durchtrittsöffnung
- 42: Bodenteil
- 43: Noppen
- 44: Steg
- 45: Seitenwand
- 46: Umlenkbereich
- 47: Abschrägung
- 48: Stirnseite
- 49: Obertrum
- 50: Untertrum
- 51: Bereich geringer Elastizität
- 52: Bereich hoher Elastizität

## Patentansprüche

1. Leitungsführungseinrichtung (1,25,26) zur Führung von Leitungen oder Kabeln, umfassend einen Führungskanal mit einem durchgehenden langgestreckten Gleitband (2,27,28,29,36,37), das unter Bildung eines Untertrums (50), eines Umlenkbereichs und eines oberhalb des Untertrums (50) geführten Obertrums (49) ablegbar ist, wobei ein Ende der Leitungsführungseinrichtung an einer stationären Einrichtung und ein anderes Ende mit einer hin- und herbeweglichen Einrichtung verbindbar ist, **dadurch gekennzeichnet, daß** der Führungskanal (3a) aus einer Vielzahl von zueinander verschwenkbaren Führungsgliedern (3,30,32,38) besteht, die auf dem Gleitband (2,27,28,29,36,37) an der dem gegenüberliegenden Trum abgewandten Seite angeordnet und lösbar an dem Gleitband (2,27,28,29,36,37) befestigbar sind.

2. Leitungsführungseinrichtung nach Anspruch 1, **dadurch gekennzeichnet, dass** an dem Gleitband (2,27,28,29,36,37) Mittel (6, 39) zur kraft- und/oder formschlüssigen Befestigung der Führungsglieder (3,30,32,38) einstückig angeformt sind.

3. Leitungsführungseinrichtung nach Anspruch 2, **dadurch gekennzeichnet, dass** Noppen (6) mit Ringwülsten (7) zur Halterung der Führungsglieder (3,30,32,38) in einer Doppelreihe auf dem Gleitband (2,27,28,29,36,37) angeordnet sind, die in Längsrichtung des Gleitbandes (2,27,28,29,36,37) angeordnet sind, die in Längsrichtung des Gleitbandes (2,27,28,29,36,37) alternierend kurze und lange Abstände (23, 24) zueinander aufweisen und hierdurch Gruppen von je vier Noppen (6) bilden, mittels derer jeweils ein Führungsglied (3,30,32) befestigbar ist.

4. Leitungsführungseinrichtung nach einem der Ansprüche 1-3, **dadurch gekennzeichnet, dass** das Gleitband (2,27,28,29,36,37) mit Rastmitteln (6) versehen ist, mittels derer die Führungsglieder (3) in Richtung der Flächennormalen des Gleitbands (2,27,28,29,36,37) geführt rastend an dem Gleitband (2,27,28,29,36,37) befestigbar sind.

5. Gleitband nach einem der Ansprüche 1 und 2, **dadurch gekennzeichnet, daß** das Gleitband (37) unter Ausbildung von vor- und zurückspringenden, sich in Längsrichtung des Gleitbandes (2,27,28,29,36,37) erstreckenden Bereichen (39, 40) profiliert ist.

6. Leitungsführungseinrichtung nach Anspruch 5, **dadurch gekennzeichnet, dass** die zurückspringenden Bereiche (39) mit Durchtrittsöffnungen (41) zur rastenden Aufnahme von an Bodenteilen (42) der Führungsglieder (38) angeordneten Befestigungsnoppen (43) versehen sind.

7. Leitungsführungseinrichtung nach einem der Ansprüche 1-6, **dadurch gekennzeichnet, daß** die Führungsglieder (3) mit Anschlägen (19, 21, 47) zur Begrenzung des Verschwenkwinkels benachbarter Abschnitte des Gleitbandes (2,27,28,29,36,37) versehen sind.

8. Leitungsführungseinrichtung nach Anspruch 7, **dadurch gekennzeichnet, dass** die Führungsglieder (3) sich mit ihren Seitenwänden (45) über einen Teil der Höhe seitlicher Stege (44) des Gleitbandes (2,27,28,29,36,37) erstrecken und ihre Stirnseiten (48) in diesen Bereichen mit als Anschlagflächen wirkenden Abschrägungen (47) versehen sind.

9. Leitungsführungseinrichtung nach Anspruch 7 oder 8, **dadurch gekennzeichnet, dass** die Führungsglieder (3) mit sich in Richtung auf das benachbarte Führungsglied (3b) erstreckenden Vorsprüngen (18) versehen sind, die einen Bereich (22) des benachbarten Führungsgliedes (3b) hintergreifen und an diesem mit einem Anschlag (21) unter Begrenzung des Verschwenkwinkels der Führungsglieder (3) anlegbar sind.

10. Leitungsführungseinrichtung nach einem der Ansprüche 1-9, **dadurch gekennzeichnet, dass** Führungselemente vorgesehen sind, mittels derer eine Bewegung der Führungsglieder (3) senkrecht zu der Verschwenkebene derselben begrenzt wird.

11. Leitungsführungseinrichtung nach Anspruch 10, **dadurch gekennzeichnet, dass** die Führungselemente als an der dem gegenüberliegenden Trum zugewandten Seite des Gleitbandes (2,27,28,29,36,37) angeordnete, seitlich voneinander beabstandete Führungsrippen (31) ausgebildet sind, die zwischen benachbarte Führungsrippen (31) des gegenüberliegenden Trums eingreifen.

12. Leitungsführungseinrichtung nach Anspruch 10, **dadurch gekennzeichnet,dass** die Führungselemente an den Führungsgliedern (3) als auf das benachbarte Führungsglied (3b) gerichtete Vorsprünge (18) ausgebildet sind, die einen Teilbereich (12) des benachbarten Führungsglieds (3b) seitlich umgreifen.

13. Leitungsführungseinrichtung nach einem der Ansprüche 1-12, **dadurch gekennzeichnet, dass** das Gleitband (2,27,28,29,36,37) in seiner Längsrichtung alternierend angeordnete Bereiche (51, 52) mit erhöhter und verringerter Biegesteifigkeit bezüglich der Verschwenkebene der Führungsglieder (3) aufweist.

14. Leitungsführungseinrichtung nach einem der Ansprüche 1-13, **dadurch gekennzeichnet, daß** die korrespondierenden Befestigungsmittel (6, 36) zur Befestigung der Führungsglieder (3) an dem Gleitband (2,27,28,29,36,37) derart ausgebildet sind, daß mehrere Führungsglieder (3) nebeneinander auf einem Gleitband (2,27,28,29,36,37) und/oder ein Führungsglied (3) auf mehreren nebeneinander angeordneten Gleitbändern (27, 28) befestigbar sind.

15. Leitungsführungseinrichtung nach Anspruch 14, **dadurch gekennzeichnet, dass** mehrere Führungsglieder (3) nebeneinander auf einem Gleitband (227,28,29,36,33) und/oder Führungsglieder auf mehreren nebeneinander angeordneten Gleitbändern (27, 28) befestigt sind.

16. Leitungsführungseinrichtung nach einem der Ansprüche 1-15, **dadurch gekennzeichnet, dass** zusätzliche Mittel (29) vorgesehen sind, um seitlich nebeneinander liegende Gleitbänder (27, 28) aneinander derart zu befestigen, daß diese gemeinsam in deren Längsrichtung verfahrbar sind.

## Claims

1. Cable guide (1,25,26) for guiding cables or lines, comprising a guide channel having a continuous, elongated sliding strip (2,27,28,29,36,37), which can be arranged to form a lower strand (50), a deflection zone and an upper strand (49) guided above the lower strand (50), where one end of the cable guide can be connected to a stationary unit and the other end to a reciprocating unit, **characterised in that** the guide channel (3a) consists of numerous guide links (3,30,32,38), which are pivotably relative to one another and which are arranged on the sliding strip (2,27,28,29,36,37) at the side facing away from the opposite strand and mounted on the sliding strip (2,27,28,29,36,37) in detachable fashion.

2. Cable guide according to claim 1, **characterised in that** means (6, 39) for mounting the guide links (3,30,32,38) in non-positive and/or positive fashion are integrally moulded on the sliding strip (2,27,28,29,36,37).

3. Cable guide according to claim 2, **characterised in that** studs (6) with tori (7) for mounting the guide links (3,30,32,38) being arranged in a double-row on the sliding strip (2,27,28,29,36,37), which is arranged in the longitudinal direction of the sliding strip (2,27,28,29,36,37), are provided being alternatively spaced in the longitudinal direction of the sliding strip (2,27,28,29,36,37) in a short and long distance (23,34) hereby generating groups of four studs (6) by means of which one guide link (3,30,32) is mountable, respectively.

4. Cable guide according to one of claims 1 to 3, **characterised in that** the sliding strip (2,27,28,29,36,37) is provided with snap elements (6), with which the guide links (3) can be snapped onto the sliding strip (2,27,28,29,36,37) when moved in the direction of the surface normals of the sliding strip (2,27,28,29,36,37).

5. Sliding strip according to one of claims 1 and 2, **characterised in that** the sliding strip (37) is profiled, forming protruding and receding areas (39, 40) extending in the longitudinal direction of the sliding strip (2,27,28,29,36,37).

6. Cable guide according to claim 5, **characterised in that** the receding areas (39) are provided with holes (41) in order to receive studs (43) arranged at bottom parts (42) of the guide links (3) in a snap-in fashion.

7. Cable guide according to one of claims 1 to 6, **characterised in that** the guide links (3) are provided with stops (19, 21, 47) to limit the pivoting angle of adjacent sections of the sliding strip (2,27,28,29,36,37).

8. Cable guide according to claim 7, **characterised in that** the guide links (3) with their side walls (45) extend over a portion of the height of lateral webs (44) of the sliding strip (2,27,28,29,36,37) and the face ends (48) of the guide links (3) in these areas are provided with bevels (47) which act as stop surfaces.

9. Cable guide according to claim 7 or 8, **characterised in that** the guide links (3) are provided with projections (18) extending in the direction of the adjacent guide link (3b), which reach behind an area (22) of the adjacent guide link (3b) and can be brought into contact with it by a stop (21), thereby limiting the pivoting angle of the guide links (3).

10. Cable guide according to one of claims 1 to 9, **characterised in that** guide elements are provided which limit the movement of the guide links (3) perpendicular to their pivoting plane.

11. Cable guide according to claim 10, **characterised in that** the guide elements are designed as guide ribs (31) arranged on the side of the sliding strip (2,27,28,29,36,37) facing the opposite strand and laterally spaced apart from one another, which are positioned between adjacent guide ribs (31) of the opposite strand.

12. Cable guide according to claim 10, **characterised in that** the guide elements of the guide links (3) are designed as projections (18) facing the adjacent guide link (3a), which reach around the side of a section (12) of the adjacent guide link (3).

13. Cable guide according to one of claims 1 to 12, **characterised in that** the sliding strip (2,27,28,29,36,37) has alternating sections (51, 52) being arranged in its longitudinal direction and having higher and lower flexural resistance relative to the pivoting plane of the guide links (3).

14. Cable guide according to one of claims 1 to 13, **characterised in that** the corresponding mounting devices (6, 36) for mounting the guide links (3) on the sliding strip (2,27,28,29,36,37) are designed such that several guide links (3) can be mounted next to one another on one sliding strip (2,27,28,29,36,37) and/or one guide link (3) on several adjacent sliding strips (27, 28).

15. Cable guide according to claim 14, **characterised in that** several guide links (3) are mounted next to one another on one sliding strip (2,27,28,29,36,37) and/or that guide links are mounted on several sliding strips (27,28) arranged adjacent to each other.

16. Cable guide according to one of claims 1 to 15, **characterised in that** additional means (29) are provided in order to laterally connect adjacent sliding strips (27, 28) such that they can be moved together in their longitudinal direction.

## Revendications

1. Dispositif de guidage de lignes (25, 26) pour guider des lignes ou des câbles, comportant un canal de guidage avec une bande coulissante allongée continue (2, 27, 28, 29, 36, 37) qui peut être posée en formant un brin inférieur (50), une zone de renvoi, et un brin supérieur (49) guidé au-dessus du brin inférieur (50), une extrémité du dispositif de guidage de lignes pouvant être reliée à un système stationnaire et une autre extrémité pouvant être reliée à un système mobile en va-et-vient, **caractérisé en ce que** le canal de guidage (3a) est constitué par une multitude d'organes de guidage (3, 30, 32, 38) en pivotement les uns par rapport aux autres qui sont agencés sur la bande coulissante (2, 27, 28, 29, 36, 37) sur le côté détourné du brin opposé et qui peuvent être fixés de façon détachable sur la bande coulissante (2, 27, 28, 29, 36, 37).

2. Dispositif de guidage de lignes selon la revendication 1, **caractérisé en ce que** sur la bande coulissante (2, 27, 28, 29, 36, 37) sont conformés d'un seul tenant des moyens (6, 39) pour la fixation en coopération de forces et/ou en coopération de formes des organes de guidage (3, 30, 32, 38).

3. Dispositif de guidage de lignes selon la revendication 2, **caractérisé en ce que** des boutons (6) comportant des bourrelets annulaires (7) pour retenir les organes de guidage (3, 30, 32, 38) sont agencés en une rangée double sur la bande coulissante (2, 27, 28, 29, 36, 37) qui sont agencés en direction longitudinale de la bande coulissante (2, 27, 28, 29, 36, 37), qui présentent les uns par rapport aux autres en alternance des distances courtes et longues (23, 24) en direction longitudinale de la bande coulissante (2, 27, 28, 29, 36, 37), et qui forment ainsi des groupes respectifs de quatre boutons (6) au moyen desquels peut être fixé un organe de guidage respectif (3, 30, 32).

4. Dispositif de guidage de lignes selon l'une des revendications 1 à 3, **caractérisé en ce que** la bande coulissante (2, 27, 28, 29, 36, 37) est pourvue de moyens d'enclenchement (6) au moyen desquels les organes de guidage (3) peuvent être fixés en enclenchement sur la bande coulissante (2, 27, 28, 29, 36, 37) avec guidage en direction des normales à la surface de la bande coulissante (2, 27, 28, 29, 36, 37).

5. Dispositif de guidage de lignes selon l'une des revendications 1 et 2, **caractérisé en ce que** la bande coulissante (37) est profilée en formant des zones (39, 40) en saillie et en retrait s'étendant en direction longitudinale de la bande coulissante (2, 27, 28, 29, 36, 37).

6. Dispositif de guidage de lignes selon la revendication 5, **caractérisé en ce que** les zones en retrait (39) sont pourvues d'ouvertures de passage (41) pour la réception par enclenchement de boutons de fixation (43) agencés sur des parties de fond (42) des organes de guidage (38).

7. Dispositif de guidage de lignes selon l'une des revendications 1 à 6, **caractérisé en ce que** les organes de guidage (3) sont pourvus de butées (19, 21, 47) pour limiter l'angle de pivotement de tronçons voisins de la bande coulissante (2, 27, 28, 29, 36, 37).

8. Dispositif de guidage de lignes selon la revendication 7, **caractérisé en ce que** les organes de guidage (3) s'étendent par leurs parois latérales (45) sur une partie de la hauteur de barrettes latérales (44) de la bande coulissante (2, 27, 28, 29, 36, 37), et **en ce que** leurs faces frontales (48) sont pourvues, dans ces zones, de chanfreins (47) faisant office de surfaces de butée.

9. Dispositif de guidage de lignes selon l'une ou l'autre des revendications 7 et 8, **caractérisé en ce que** les organes de guidage (3) sont pourvus de saillies (18) qui s'étendent en direction de l'organe de guidage voisin (3b) et qui engagent par l'arrière une zone (22) de l'organe de guidage voisin (3b) et peuvent être posées sur celle-ci par une butée (21) en limitant l'angle de pivotement des organes de guidage (3).

10. Dispositif de guidage de lignes selon l'une des revendications 1 à 9, **caractérisé en ce qu'**il est prévu des éléments de guidage au moyen desquels un mouvement des organes de guidage (3) perpendiculairement au plan de pivotement de ceux-ci est limité.

11. Dispositif de guidage de lignes selon la revendication 10, **caractérisé en ce que** les éléments de guidage sont réalisés sous forme de nervures de guidage (31) agencées sur le côté de la bande coulissante (2, 27, 28, 29, 36, 37) tourné vers le brin opposé et écartées latéralement les unes des autres qui s'engagent entre des nervures de guidage voisines (31) du brin opposé.

12. Dispositif de guidage de lignes selon la revendication 10, **caractérisé en ce que** les éléments de guidage sur les organes de guidage (3) sont réalisés sous forme de saillies (18) dirigées vers l'organe de guidage voisin (3b), qui entourent latéralement une zone partielle (12) de l'organe de guidage voisin (3b).

13. Dispositif de guidage de lignes selon l'une des revendications 1 à 12, **caractérisé en ce que** la bande coulissante (2, 27, 28, 29, 36, 37) comprend des zones (51, 52) agencées en alternance dans sa direction longitudinale et présentant des rigidités en flexion accrues et réduites par rapport au plan de pivotement des organes de guidage (3).

14. Dispositif de guidage de lignes selon l'une des revendications 1 à 13, **caractérisé en ce que** les moyens de fixation correspondants (6, 36) pour fixer les organes de guidage (3) sur la bande coulissante (2, 27, 28, 29, 36, 37) sont réalisés de telle sorte que plusieurs organes de guidage (3) peuvent être fixés les uns à côté des autres sur une bande coulissante (2, 27, 28, 29, 36, 37) et/ou qu'un organe de guidage (3) peut être fixé sur plusieurs bandes coulissantes (27, 28) agencées les unes à côté des autres.

15. Dispositif de guidage de lignes selon la revendication 14, **caractérisé en ce que** plusieurs organes de guidage (3) sont fixés les uns à côté des autres sur une bande coulissante (2, 27, 28, 29, 36, 37) et/ou **en ce que** des organes de guidage sont fixés sur plusieurs bandes coulissantes (27, 28) agencées les unes à côté des autres.

16. Dispositif de guidage de lignes selon l'une des revendications 1 à 15, **caractérisé en ce qu'**il est prévu des moyens supplémentaires (29) pour fixer les unes aux autres des bandes coulissantes (27, 28) situées latéralement les unes à côté des autres, de telle sorte que celles-ci sont déplaçables conjointement dans leur direction longitudinale.
